# EUROPÄISCHE PATENTANMELDUNG

(11) **EP 2 287 054 A1**
(43) Veröffentlichungstag der Anmeldung: **23.02.2011**
(21) Anmeldenummer: 09010580.0
(22) Anmeldetag: 18.08.2009
(51) Int. Cl.: B60S 9/18, B60D 1/66

(54) **Stützrad für Fahrzeuganhänger**

(71) Anmelder: Steelpress Sp. z.o.o. (GmbH), 60-143 Poznan (PL)
(72) Erfinder: Domachowski, Andrzej, 61-462 Poznan (PL)
(74) Vertreter: Cieszkowski, Antoni

(57) **Zusammenfassung**

Gegenstand der Erfindung ist ein Stützrad für Fahrzeuganhänger, das für die Manövrierung des Anhängers, nach seiner Abkupplung vom Zughaken, dient.

Das Stützrad ist an der Deichsel **(1)** eines nicht auf der Zeichnung dargestellten Anhängers befestigt, ist ausgestattet mit einer Zugkugelkupplung **(2)** für die Verbindung des Anhängers mit dem nicht dargestellten Zughaken. Das Stützrad hat ein Manövrierrad **(3)** das im Ausleger **(4)** gelagert ist, der angeschlossen ist an eine vertikale Buchse **(5),** die in einem vertikalen, zylindrischen Halter **(6)** eingesetzt ist. Die Buchse **(5)** ist unter der Einwirkung des Schraubengetriebes axial verstellbar und der Halter **(6),** untergebracht in einer unbeweglichen Schelle **(10),** ist von Hand axial verstellbar. Gemäß der Erfindung hat das Stützrad eine selbsttätige Sperreinrichtung, die das hochgehobene Manövrierrad **(3)** festhält. Die Sperreinrichtung ist mit einem schwenkbaren Anschlag **(13)** ausgestattet, der nach dem Hochheben des Manövrierrades **(3)** in der bestimmten Ruhestellung mit dem unteren Ende der Buchse **(5)** verzahnt ist. Wie auf Fig. 1 - 4 und 6 dargestellt, ist der Anschlag **(13)** ein horizontaler Steg **(16)** des schwenkbaren Bügels **(14)** in u-ähnlicher Form bzw. ein hakenähnlicher Vorstand **(25)** des schwenkbaren Hebels **(26).** Bei der vertikalen Verschiebung des Manövrierrades **(3)** liegt der Steg **(16)** des Bügels **(14)** bzw. der Vorstand **(25)** des Hebels **(26)** gleitend an den seitlichen Flächen **(22, 23)** des Halters **(6)** sowie der Buchse **(5)** an. Nach der Hochhebung des Manövrierrades **(3)** in die bestimmte Ruhestellung liegt der Steg **(16)** bzw. der Vorstand **(25)** von unten an der stirnseitigen Fläche **(24)** der Buchse **(5)** an.

## Beschreibung

Gegenstand der Erfindung ist ein Stützrad für Fahrzeuganhänger, das für die Manövrierung des Anhängers, nach seiner Abkupplung vom Zughaken, dient.

Bekannt ist ein Stützrad für Fahrzeuganhänger, das an der Anhängerdeichsel befestigt und mit einem Manövrierrad ausgestattet ist, das im Ausleger gelagert ist, der Ausleger ist radial an einer vertikalen Buchse befestigt. Die Buchse befindet sich in einem vertikal angebrachten Halter von zylindrischer Form und ist in axialer Richtung mittels Schraubengetriebe verstellbar. Der vertikale Halter, steif mit der Anhängerdeichsel verbunden und mit einer festen Schelle umgeben, ist mit der Hand axial verstellbar. Am Ende der Deichsel befindet sich die Zugkugelkupplung für die gelenkige Verbindung des Anhängers mit dem Zughaken des Fahrzeuges. Während des Anhängerschleppens soll das Manövrierrad des Stützrades so hochgehoben sein, um keinen Kontakt mit dem Boden zu haben. In dieser Stellung des Manövrierrades sind der Halter sowie die in ihm angebrachte Buchse maximal nach oben verschoben, wobei der Halter unbeweglich in der Schelle bleibt. Während des Schleppens des Anhängers kann geschehen, dass infolge der Schwingungen bzw. bei nachlässiger Verklemmung der Schelle sich der Halter auf unkontrollierte Weise senkt und das Manövrierrad beginnt auf dem Boden mit unzulässiger Geschwindigkeit zu rollen. Im Ergebnis kommt es zu ernsthaften Beschädigungen des Stützrades und sogar des geschleppten Anhängers.

Das Stützrad für Fahrzeuganhänger, verbunden mit der Anhängerdeichsel sowie ausgestattet mit einem Manövrierrad, ist im Ausleger gelagert, der radial an einer vertikalen Buchse befestigt ist, die sich in einem vertikal angebrachten Halter von zylindrischer Form befindet und mittels Schraubengetriebe axial verstellbar ist, wobei der Halter, steif mit der Anhängerdeichsel verbunden und mit einer festen Schelle umgeben, mit der Hand axial verstellbar ist, dagegen ist am Ende der Deichsel eine Zugkugelkupplung für die gelenkige Verbindung des Anhängers mit dem Zughaken des Fahrzeuges eingesetzt, hat gemäß der Erfindung eine selbsttätige Sperreinrichtung zum Festhalten des hochgehobenen Manövrierrades, ausgestattet mit einem schwenkbaren Anschlag, der nach der Hochhebung des Manövrierrades in die bestimmte Ruhestellung, mit dem unteren Ende der Buchse verzahnt ist. Der Anschlag der Sperreinrichtung ist ein horizontaler Steg des Bügels in U-ähnlicher Form, dessen seitliche Arme mit ihren oberen Enden lose in den Löchern der festen Stütze eingesetzt sind. Bei der vertikalen Verschiebung des Manövrierrades liegt der Steg des Bügels gleitend an den seitlichen Flächen des Halters und der Buchse an und nach der Hochhebung des Manövrierrades in die bestimmte Ruhestellung liegt der Steg des Bügels von unten an der stirnseitigen Fläche der Buchse an. Um ein elastisches Ausschwenken des Bügels zu ermöglichen, ist jeder seiner Arme von einer Schraubenfeder umgeben, deren Enden am Kragen des Armes sowie auf der horizontalen Fläche der festen Stütze gestützt sind. Bei einer anderen Lösung gemäß der Erfindung hat der Anschlag der Sperreinrichtung die Form eines hakenförmigen Vorstandes, gebildet am Arm des Hebels. Bei der vertikalen Verschiebung des Manövrierrades liegt der Vorstand des Hebels gleitend an den seitlichen Flächen des Halters und der Buchse an und nach der Hochhebung des Manövrierrades in die bestimmte Ruhestellung liegt der Vorstand des Hebels von unten an der stirnseitigen Fläche der Buchse an. Der Hebel hat eine mit der festen Stütze verbundene Drehachse. Der Arm des Hebels, ausgestattet mit einem hakenförmigen Vorstand, ist in Richtung des Halters und Buchse schwenkbar unter der Einwirkung des elastischen Elements, das am vorteilhaftesten die Form einer Schlingfeder hat. Dank der Anwendung der Erfindung ist das Manövrierrad des Stützrades während des Schleppens des Anhängers wirksam gegen zufälligen Kontakt mit dem Boden gesichert.

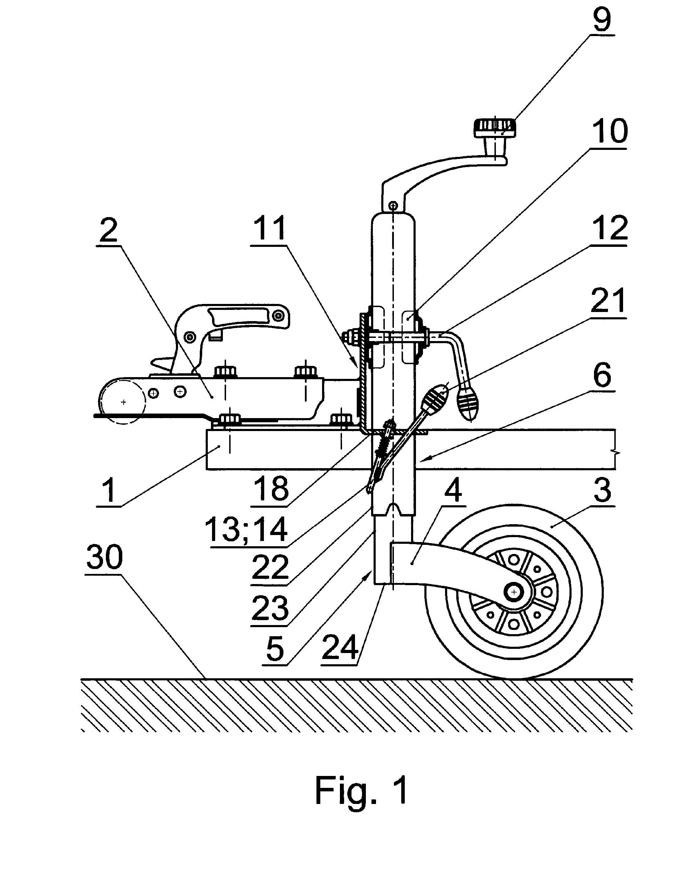

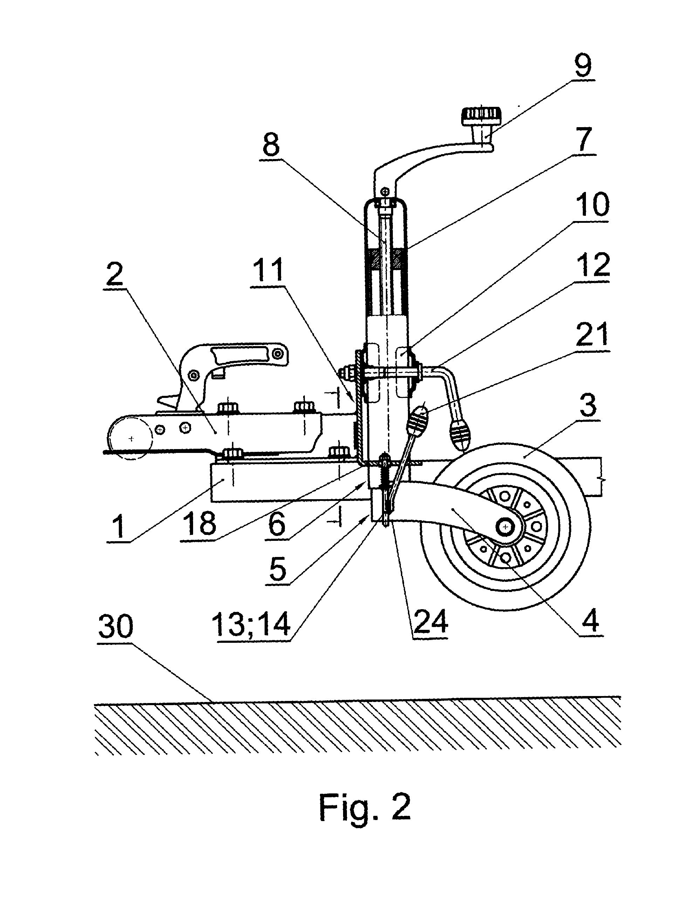

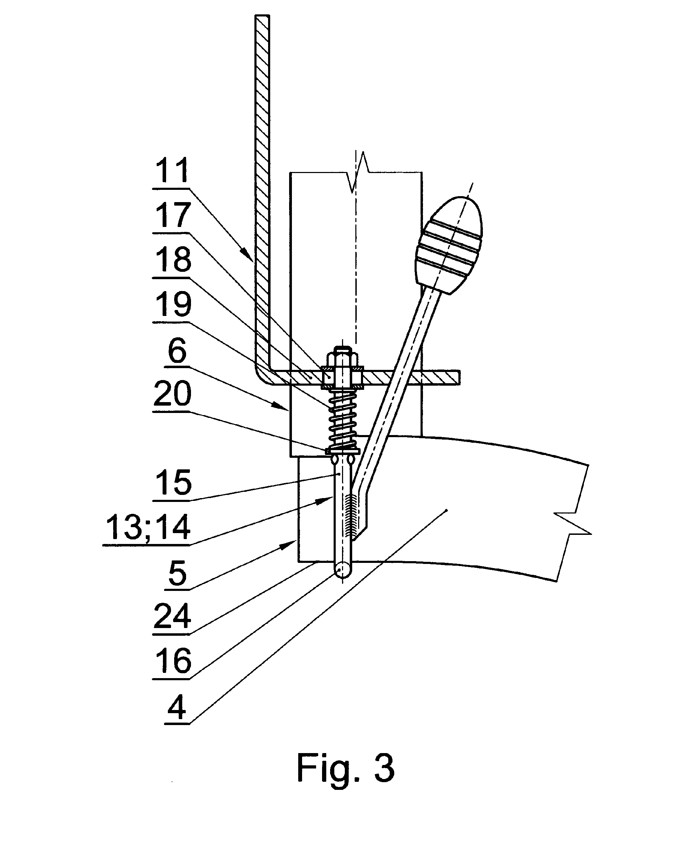

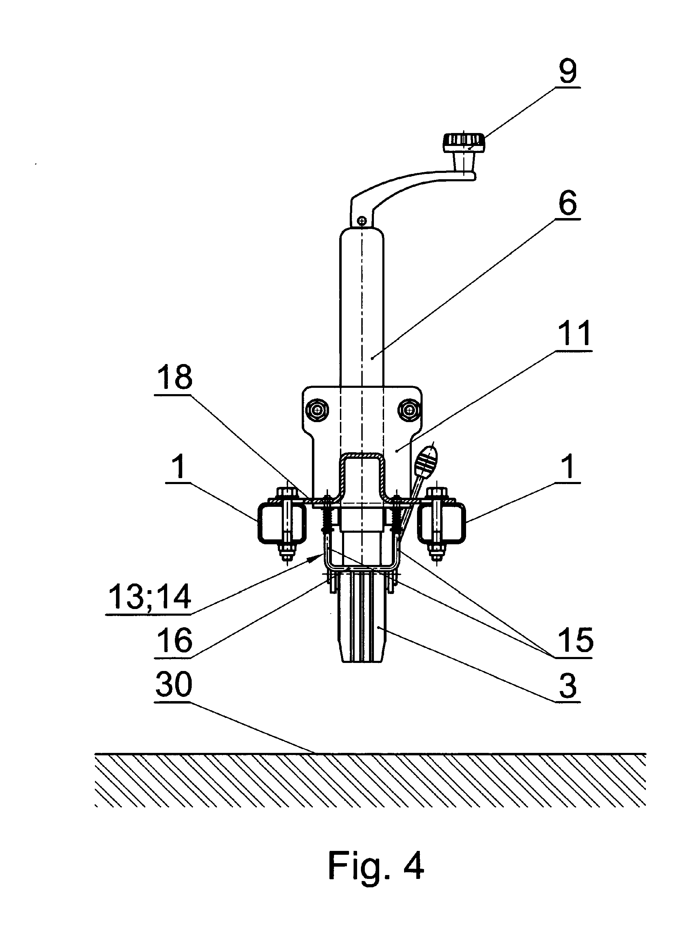

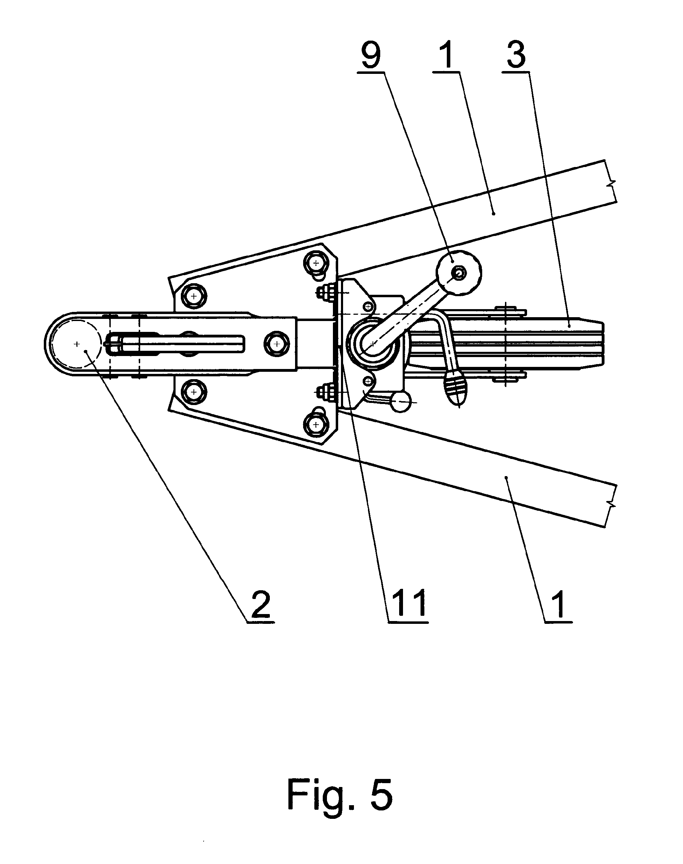

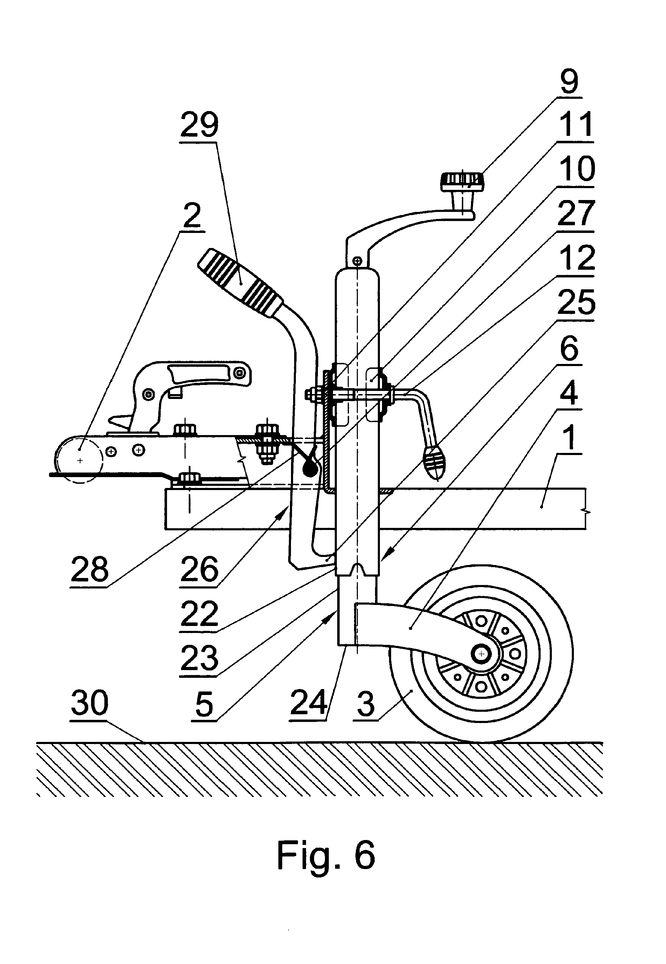

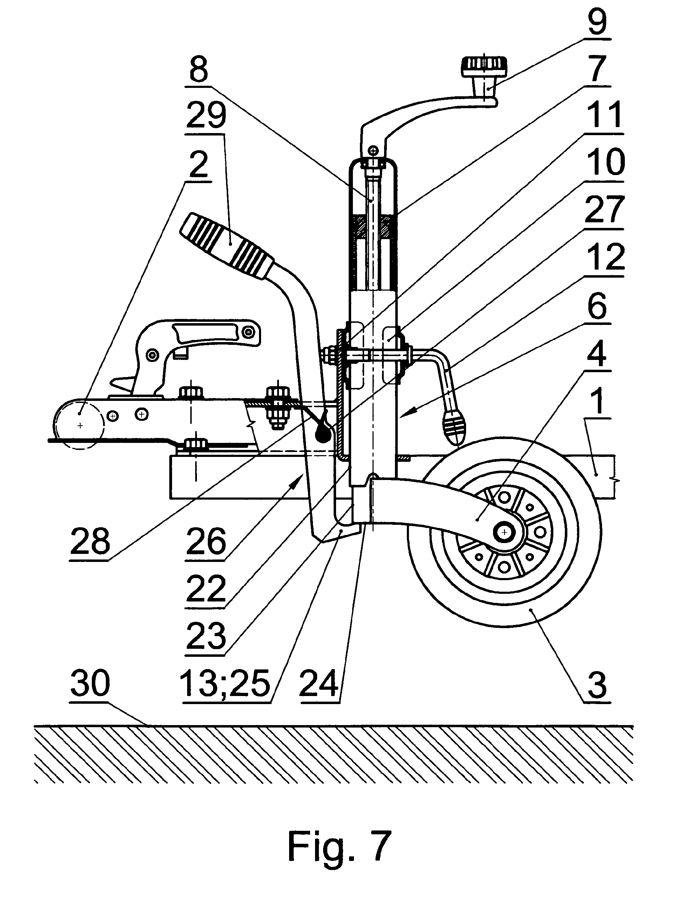

Der Gegenstand der Erfindung ist als Ausführungsbeispiel auf der Zeichnung dargestellt, auf der die Fig. 1 die Seitenansicht des Stützrades mit der Schelle sowie mit dem gesenkten Manövrierrad, die Fig. 2 - die Seitenansicht des Stützrades mit der Schelle und dem hochgehobenem Manövrierrad, die Fig. 3 - die vergrößerte Seitenansicht eines Fragments des Stützrades mit der Schelle, die Fig. 4 - die Vorderansicht des Stützrades gemäß Fig. 1, die Fig. 5 - die Draufsicht auf das mit der Anhängerdeichsel verbundene Stützrad, die Fig. 6 - die Seitenansicht des Stützrades mit der Schelle und dem gesenktem Manövrierrad, die Fig. 7 die Seitenansicht des Stützrades mit der Schelle sowie dem hochgehobenen Manövrierrad, darstellen.

Das Stützrad gemäß Erfindung ist an der V-förmigen Deichsel **1,** des nicht dargestellten Anhängers befestigt. Am vorderen Ende der Deichsel **1** befindet sich die bekannte Zugkugelkupplung **2,** bestimmt für die gelenkige Verbindung des Anhängers mit dem auf der Zeichnung nicht dargestellten Zughaken des Fahrzeuges. Das Stützrad hat ein Manövrierrad **3,** das gelagert ist im mit der vertikalen Buchse **5** verbundenen Ausleger **4.** Die Buchse **5** ist in einem vertikalen, zylindrischen Halter **6** eingesetzt und hat von oben eine Schraubenmutter **7,** in die die vertikale Schraube **8** eingeschraubt ist, gelagert im oberen Teil des Halters **6** und endet mit einer quer angebrachten Antriebskurbel **9.** Dank dem so gestalteten Schraubengetriebe ist die Buchse **5** axial verstellbar. Beim Rechts- bzw. Linksdrehen der Kurbel **9,** hebt bzw. senkt sich die Buchse **5** samt dem Ausleger **4** und dem Manövrierrad **3.** Der vertikale Halter **6** ist in der festen, unbeweglichen Schelle **10** eingesetzt, der an der Deichsel **1** mittels fester, winkeliger Stütze **11** befestigt sowie mit einer Klemmschraube **12** ausgestattet ist. Nach dem Lösen der Schelle **10** ist der Halter **6** mit der Hand in axialer Richtung verstellbar. Um ein unkontrolliertes Senken des Manövrierrades **3** während des Anhängerschleppens nicht zuzulassen, ist das Stützrad mit einer selbsttätigen Sperreinrichtung ausgestattet, das das hochgehobene Manövrierrad **3** festhält. Diese Sperreinrichtung hat einen schwenkbaren Anschlag **13,** der nach dem Hochheben des Manövrierrades **3** in der bestimmten Ruhestellung mit dem unteren Ende der nach oben verschobenen Buchse **5** verzahnt ist. Gemäß Fig. 1 - 3 ist der Anschlag **13** ein horizontaler Steg **16** des Bügels **14,** der eine U-ähnliche Form hat. Die seitlichen Arme **15** des Bügels **14** sind mit ihren oberen Enden lose in den Löchern **17** eingesetzt, die im horizontalen Flansch **18** der Stütze **11** gebildet sind. Jeder Arm **15** des Bügels **14** ist von einer Schraubenfeder **19** umgeben. Deren beide Enden sind zwischen dem Kragen **20** des Armes **15** sowie der unteren horizontalen Fläche des Flansches **18** der Stütze **11** verspreizt. An einem der Arme **15** des Bügels **14** ist der Handgriff **21** befestigt. Bei der vertikalen Verschiebung des Manövrierrades **3** liegt der Steg **16** des schräg geschwenkten Bügels **14** gleitend an den seitlichen Flächen **22, 23** des Halters **6** bzw. der Buchse **5** an. Wenn das Manövrierrad **3** in die bestimmte Ruhestellung hochgehoben wird, dann nimmt der Bügel **14,** unter Einwirkung der Schraubenfedern **19,** selbsttätig die vertikale Lage ein und sein Steg **16** liegt von unten an der stirnseitigen Fläche **24** der Buchse **5** an. Wie auf Fig. 5 und 6 dargestellt, hat der Anschlag **13** der Sperreinrichtung die Form eines hakenförmigen Vorstandes **25,** der am unteren Arm des Hebels **26** gebildet ist. Dieser Hebel ist in der Stütze **11** mittels der Drehachse **27** gelagert, wobei der untere Arm des Hebels **26,** ausgestattet mit einem hakenförmigen Vorstand **25,** in Richtung des Halters **6** und der Buchse **5,** unter der Einwirkung des elastischen Elements in Form einer Schlingfeder **28,** schwenkbar ist. Der obere Arm des Hebels **26** endet mit dem Handgriff **29.** Bei vertikaler Verschiebung des Manövrierrades **3** liegt der Vorstand **25** des Hebels **26** gleitend an den seitlichen Flächen **22, 23** des Halters **6** sowie der Buchse **5** an. Nach der Hochhebung des Manövrierrades **3** in die bestimmte Ruhestellung liegt der Vorstand **25** des Hebels **26** von unten an der stirnseitigen Fläche **24** der Buchse **5** an. Zwecks Vorbereitung des nicht dargestellten Anhängers zum Aufenthalt, ist zunächst die Zugkugelkupplung **2** der Deichsel **1** vom nicht dargestellten Zughaken abzukuppeln. Dann wird die Klemmschraube **12** der Schelle **10** gelöst, mittels Handgriff **21** wird der Bügel **14** ausgeschwenkt und das Manövrierrad **3** wird auf den Boden **30** abgesenkt. Dann wird wiederholt die Schelle **10** verklemmt und der Halter **6** arretiert, folglich, durch Drehen der Kurbel **9,** erhebt sich die Deichsel **1** so hoch, bis sich die Zugkugelkupplung **2** vom nicht dargestellten Zughaken trennt. Der abgekuppelte Anhänger kann dann frei zum ausgewählten Parkplatz überführt werden. Bei der Verbindung des Anhängers mit dem nicht dargestellten Fahrzeug ist zunächst die Zugkugelkupplung **2** der Deichsel **1** auf dem Zughaken aufzusetzen. Dann wird die Kurbel **9** so gedreht, dass sich die Buchse **5** in ihre höchst gelegene Lage erhebt, in der der Ausleger **4** auf dem unteren Ende des Halters **6** gestützt ist. Dann wird die Schelle **10** gelöst und das Manövrierrad **3** so hochgehoben, bis der Steg **16** des Bügels **14** bzw. der Vorstand **25** des Hebels **26** sich in Richtung der Buchse **5** ausschwenkt und sich unter ihrer stirnseitigen Fläche **24** einfindet. Die Anbringung des Steges **16** des Bügels **14** bzw. des Vorstandes **25** des Hebels **26** in dieser Lage, verhindert wirksam die zufällige Senkung des Manövrierrades **3** auf den Boden **30.**

### Bezeichnungen

- 1 -: Deichsel
- 2 -: Zugkugelkupplung
- 3 -: Manövrierrad
- 4 -: Ausleger
- 5 -: Buchse
- 6 -: Halter
- 7 -: Gewindemutter
- 8 -: Schraube
- 9 -: Kurbel
- 10 -: Schelle
- 11 -: Stütze
- 12 -: Klemmschraube
- 13 -: Anschlag
- 14 -: Bügel
- 15 -: Arm
- 16 -: Steg
- 17 -: Loch
- 18 -: Flansch
- 19 -: Schraubenfeder
- 20 -: Kragen
- 21-: Handgriff
- 22 -: Fläche
- 23 -: Fläche
- 24 -: Fläche
- 25 -: Vorstand
- 26 -: Hebel
- 27 -: Achse
- 28 -: Schlingfeder
- 29 -: Handgriff
- 30 -: Boden

## Patentansprüche

1. Das Stützrad für Fahrzeuganhänger, verbunden mit der Deichsel des Anhängers sowie ausgestattet mit einem Manövrierrad, gelagert im Ausleger, radial an die vertikale Buchse angebracht, die sich in einem vertikalen, zylindrischen Halter befindet und in axialer Richtung mittels Schraubengetriebe verstellbar ist, wobei der Halter, steif mit der Anhängerdeichsel verbunden sowie von einer festen Schelle umgeben, mit der Hand in axialer Richtung verstellbar ist und am Ende der Deichsel die Zugkugelkupplung für die gelenkige Verbindung des Anhängers mit dem Zughaken des Fahrzeuges angebracht ist, ***dadurch gekennzeichnet,* dass** es für die Festhaltung des hochgehobenen Manövrierrades **(3)** eine selbsttätige Sperreinrichtung hat, ausgestattet mit einem schwenkbaren Anschlag **(13),** der nach der Hebung des Manövrierrades **(3)** in die bestimmte Ruhestellung mit dem unteren Ende der axial verstellbaren Buchse **(5)** verzahnt ist.

2. Das Stützrad gemäß Anspruch 1, ***dadurch gekennzeichnet,* dass** der Anschlag **(13)** der Sperreinrichtung ein horizontaler Steg **(16)** des Bügels **(14)** in u-ähnlicher Form ist, dessen seitliche Arme **(15)** mit ihren oberen Enden lose in den Löchern **(17)** der festen Stütze **(11)** eingesetzt sind, wobei der Steg **(16)** des Bügels **(14)** während der vertikalen Verschiebung des Manövrierrades **(3)** gleitend an den seitlichen Flächen **(22, 23)** des Halters **(6)** und der Buchse **(5)** anliegt, dagegen nach der Hochhebung des Manövrierrades **(3)** in die bestimmte Ruhestellung liegt der Steg **(16)** des Bügels **(14)** von unten an der stirnseitigen Fläche **(24)** der Buchse **(5)** an.

3. Das Stützrad gemäß Anspruch 2, ***dadurch gekennzeichnet,* dass** jeder der Arme (**15)** des Bügels **(14)** von einer Schraubenfeder **(19)** umgeben ist, deren Enden am Kragen **(20)** des Armes **(15)** sowie auf der unteren Fläche des Flansches **(18)** der Stütze **(11)** gestützt sind.

4. Das Stützrad gemäß Anspruch 1, ***dadurch gekennzeichnet,* dass** der Anschlag **(13)** der Sperreinrichtung die Form eines hakenförmigen Vorstandes **(25)** hat, der auf dem Arm des Hebels **(26)** gebildet ist, wobei der hakenförmige Vorstand **(25),** während der vertikalen Verschiebung des Manövrierrades **(3),** gleitend an den seitlichen Flächen **(22, 23)** des Halters **(6)** und der Buchse **(5)** anliegt und nach der Hochhebung des Manövrierrades **(3)** in die bestimmte Ruhestellung liegt der hakenförmige Vorstand **(25)** des Hebels **(26)** von unten an der stirnseitigen Fläche **(24)** der Buchse **(5)** an.

5. Das Stützrad gemäß Anspruch 4, ***dadurch gekennzeichnet,* dass** der Hebel **(26)** eine Drehachse **(27)** hat, die mit der festen Stütze **(11)** verbunden ist und der Arm des Hebels **(26)** mit dem hakenförmigen Vorstand **(25)** ist unter der Einwirkung des elastischen Elements **(28)** schwenkbar in Richtung des Halters **(6)** und der Buchse **(5).**

6. Das Stützrad gemäß Anspruch 5, ***dadurch gekennzeichnet,* dass** das elastische Element des Hebels **(26)** eine Schlingfeder **(28)** ist.
